# EUROPÄISCHE PATENTSCHRIFT

(11) **EP 2 562 015 B1**
(45) Veröffentlichungstag und Bekanntmachung des Hinweises auf die Patenterteilung: **04.12.2019**
(21) Anmeldenummer: 12180543.6
(22) Anmeldetag: 15.08.2012
(51) Int. Cl.: B60G 17/052, B62D 61/12

(54) **LIFTACHSVENTILEINHEIT**
Lifting axle valve unit
Unité de soupape d'essieu relevable

(30) Priorität: 26.08.2011 DE 102011053031
(43) Veröffentlichungstag der Anmeldung: 27.02.2013
(73) Patentinhaber: Haldex Brake Products Aktiebolag, 261 24 Landskrona (SE)
(72) Erfinder: Becke, Stefan, 68804 Altlussheim (DE); Tschöke, Tobias, 69121 Heidelberg (DE); Sulzyc, Georg, 68305 Mannhelm (DE)
(74) Vertreter: REHBERG HÜPPE + PARTNER

(56) Entgegenhaltungen:
- EP-A1- 0 536 124
- DE-A1- 19 515 895
- DE-A1-102004 051 812
- DE-A1-102006 023 606
- DE-C1- 4 037 461
- DE-C1- 4 314 994
- US-A- 3 401 948

## Beschreibung

### TECHNISCHES GEBIET DER ERFINDUNG

Die Erfindung betrifft eine Liftachsventileinheit, welche bestimmt ist für den Einsatz in einem Nutzfahrzeug mit Luftfederung. Bei einem derartigen Nutzfahrzeug handelt es sich insbesondere um einen Sattelauflieger, ein Anhängefahrzeug, einen Bus oder eine Zugmaschine.

### STAND DER TECHNIK

Liftachsventileinheiten dienen der bedarfsgerechten Anpassung der Zahl der eine Achslast tragenden Achsen des Nutzfahrzeugs. Bei einem leeren oder nur unterhalb eines Schwellwerts für die Beladung beladenen Nutzfahrzeugs kann eine oder mehrere Liftachse angehoben werden. Mit dem Überschreiten des Schwellwerts der Beladung wird automatisch mittels der Liftachsventileinheit mindestens eine Liftachse abgesenkt, wozu eine Entlüftung von Liftbälgen erfolgt, welche in belüftetem Zustand die Liftachse anheben. Gleichzeitig werden Luftfederbälge der Liftachse zur Abstützung der Achslast der Liftachse belüftet. Ziel der Veränderung der Zahl der eine Achslast tragenden Achsen des Nutzfahrzeugs kann eine Minimierung des Verschleißes der den Achsen zugeordneten Reifen und/oder eine Gewährleistung eines verbesserten Bremsverhaltens für unterschiedliche Beladungen sein. Auch möglich ist die Veränderung der Zahl der eine Achslast tragenden Achsen für den Fall, dass von einer Zahl der Achsen abhängige Gebühren wie Mautgebühren erhoben werden. Schließlich kann die Liftachsventileinheit dafür zuständig sein, im Fall der Absenkung der Liftachse die pneumatische Beaufschlagung der Luftfederbälge der ständig wirksamen Achsen sowie der aktivierten Liftachse entsprechend einer gewünschten Aufteilung der Achslasten auf die wirksamen Achsen zu verändern. Eine zusätzliche Nutzung der Liftachse muss auch erfolgen, um die mittels der Bremsanlage herbeizuführende erforderliche maximale Bremskraft mit zunehmender Beladung und damit zunehmender Normalkraft zwischen Reifen und Fahrbahn nicht zu groß werden zu lassen. Zu große Bremskräfte können von den Bremskraft-Aktuatoren überhaupt nicht oder nicht für längere Zeit erzeugt werden, sodass ohne zusätzliche Absenkung der Liftachse bei einer Vergrößerung der Beladung eine Überlastung der Bremsanlage erfolgen könnte oder eine maximal erforderliche Bremskraft nicht erzeugt werden könnte, sodass sich ein Bremsweg vergrößern würde.

DE 199 05 113 B4 offenbart auch die Möglichkeit, eine an sich angesichts der Beladung abzusenkende Liftachse kurzzeitig anzuheben, um eine Antriebsachse des Nutzfahrzeugs gezielt zu überlasten, um einen Anfahrvorgang auf einem glatten oder schlecht greifenden Untergrund zu unterstützen.

Vielfältige unterschiedliche Liftachsventileinheiten, welche die vorgenannten Funktionen zumindest teilweise gewährleisten, sind aus dem Stand der Technik bekannt. Lediglich beispielhaft wird hinsichtlich der prinzipiellen und konstruktiven Ausgestaltung derartiger Liftachsventileinheiten auf die Druckschriften US 2011/0101257 A1**,** EP 0 170 794 A2**,** DE 199 05 113 B4**,** DE 44 10 892 C2**,** DE 43 14 994 C1**,** DE 40 37 461 C1**,** DE 36 38 849 A1 und DE 89 11 010 U1 verwiesen. Hierbei können Liftachsventileinheiten manuell, automatisch, mechanisch, pneumatisch und/oder elektronisch gesteuert oder geregelt sein.

DE 10 2004 051 812 A1 offenbart eine Druckluftversorgungseinrichtung mit einem Luftaufbereitungsmodul mit einem Lufttrockner und Kreisschutzeinrichtungen für mehrere Verbraucherkreise sowie einer elektronischen Steuereinheit. Eine Heizeinrichtung ist benachbart der Steuereinheit angeordnet, offensichtlich um eine Mindesttemperatur der Steuereinheit und/oder eine Mindesttemperatur des Lufttrockners und des Druckreglers zu gewährleisten. Die Druckluftversorgungseinrichtung ist integral mit einer als Liftachsmodul bezeichneten Ventilgruppe ausgebildet.

Die nicht gattungsgemäße Druckschrift US 3,401,948 A betrifft ein Niveauregelsystem eines Automobils, bei dem die Fahrzeugräder über Luftfederbälge mit parallelen metallischen Federn und Stoßdämpfern abgestützt sind. In dem Niveauregelsystem werden die Luftfederbälge von einer Pumpe über eine Ventileinheit mit Druckluft versorgt. Die Ventileinheit weist einerseits ein Rückschlagventil auf, über welches ohne Förderleistung der Pumpe die Druckluft in den Luftfederbälgen gesichert werden kann. Des Weiteren weist die Ventileinheit ein Entlüftungsventil auf, über welches bei Verringerung der Beladung des Automobils einer Vergrößerung des Niveaus mittels einer Entlüftung der Luftfederbälge entgegengewirkt werden kann. Die elektrische Betätigung der Ventileinheit erfolgt über einen elektrischen Niveauschalter, welcher über ein mechanisches Gestänge mit einem Differenzialgetriebe des Automobils gekoppelt ist. Das Entlüftungsventil wird über eine Spule geöffnet und geschlossen. Bei niedrigen Temperaturen kann die Spule des Entlüftungsventils dazu dienen, gefrorenes Kondensat der Druckluft zu schmelzen.

DE 195 15 895 A1 offenbart eine Heizeinrichtung in Serie mit einem thermischen Schalter, mittels welcher bedarfsgerecht ein Sicherheitsventil auf der nassen Seite des Trockners in einer Kraftfahrzeugdruckluftversorgungseinrichtung erwärmt werden kann.

### AUFGABE DER ERFINDUNG

Der Erfindung liegt die Aufgabe zugrunde, ein Liftachsventil vorzuschlagen, welches hinsichtlich seiner Funktion und/oder Betriebssicherheit verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der Erfindung liegt die Beobachtung zugrunde, dass es bei dem Betrieb von Nutzfahrzeugen mit Liftachsen bei niedrigen Umgebungstemperaturen zu Beeinträchtigungen der Liftachsfunktion kommen kann, was auch der Fall sein kann, wenn die Umgebungstemperaturen während des Betriebs des Nutzfahrzeugs am Tage selbst nicht so niedrig sind, aber nachts niedrige Temperaturen vorgeherrscht haben. Um lediglich ein Beispiel zu nennen, kann bei einem Betrieb eines Nutzfahrzeugs in Kanada oder Skandinavien nachts die Umgebungstemperatur kleiner sein als - 40°C, womit es zu einer Abkühlung der Liftachsventileinheit kommt, die infolge der Isolation und Wärmekapazität der Liftachsventileinheit auch teilweise aufrecht erhalten bleibt, wenn sich die Umgebungstemperatur am Tag erhöht. Eine verringerte Temperatur der Liftachsventileinheit kann dazu führen, dass insbesondere infolge veränderter Passungswahlen und nicht korrekt schließender Ventilsitze eine übermäßige Leckage in der Liftachsventileinheit auftritt. Ebenfalls möglich ist, dass Ventilelemente der Liftachsventileinheit festfrieren oder sich infolge von kältebedingten veränderten pneumatischen Zuständen oder veränderten Reibungsbedingungen nicht wie gewünscht betätigen lassen. Schlimmstenfalls kommt es während einer Beladung des Nutzfahrzeugs nicht zu der erforderlichen Absenkung der Liftachse, was dann eine Überlast an den anderen Achsen zur Folge hat. Infolge dieser Überlast kommt es zu einem erhöhten Verschleiß an den Reifen dieser Achsen. Umgekehrt ist es auch möglich, dass mit einer Entladung des Nutzfahrzeugs die Liftachse nicht wunschgemäß angehoben wird.

Grundsätzlich kommt es mit Inbetriebnahme des Nutzfahrzeugs zu einer Erwärmung der pneumatischen Bauelemente, die beispielsweise beruhen kann auf der Bereitstellung von Druckluft mit einer erhöhten Temperatur durch die Verdichtung in dem Kompressor. Ebenfalls möglich ist, dass mit der Aufnahme des Bremsbetriebs an den Bremsen in Wärme umgewandelte Bremsenergie über die Gehäuse und Tragstrukturen zu der Liftachsventileinheit übertragen wird. Erfolgt aber gerade kältebedingt nicht das erforderliche Absenken der Liftachse, tritt dieser Effekt mangels Betätigung der Bremsen der Liftachse hier nicht auf. Hinzu kommt, dass unter Umständen eine Liftachsventileinheit am "Ende der pneumatischen Kette" angeordnet ist, sodass auch eine Erwärmung der Liftachsventileinheit durch wärmere Druckluft erst nach ca. einer Stunde fortgesetzten Fahrbetriebs mit unerwünscht angehobener oder abgesenkter Liftachse erfolgt. Verschärft wird diese Problematik auch dadurch, dass die Liftachsventileinheit dem Fahrtwind ausgesetzt sein kann, womit eine Erwärmung der Liftachsventileinheit weiter verzögert wird.

Erfindungsgemäß wird den obigen Beobachtungen dadurch Rechnung getragen, dass die Liftachsventileinheit eine Heizeinrichtung besitzt, mittels welcher (alternativ oder kumulativ) zu den zuvor genannten Mechanismen zur Erwärmung der Liftachsventileinheit eine Erwärmung der Liftachsventileinheit bedarfsgerecht herbeigeführt werden kann. Die Heizeinrichtung kann hierbei als eine kompakte Heizeinrichtung oder als verteilte Einrichtung mit mehreren Bauelementen beliebiger Ausgestaltung ausgebildet sein, die über die Liftachsventileinheit an geeignete Stellen verteilt sein können. Die Heizeinrichtung oder die genannten Bauelemente kann oder können zumindest teilweise in ein Gehäuse der Liftachsventileinheit oder beliebige Bauelemente integriert sein oder an ein Gehäuse der Liftachsventileinheit angesetzt sein.

Die erfindungsgemäße Liftachsventileinheit ist insbesondere als singuläres Bauelement ausgebildet und separat und beabstandet von der Druckluftaufbereitungseinrichtung ausgebildet und angeordnet, insbesondere im Bereich der zugeordneten Liftachse.

In bevorzugter Ausgestaltung der Erfindung ist die Heizeinrichtung als Modul ausgebildet, welches somit "als Ganzes" mit einem Grundmodul der Liftachsventileinheit, insbesondere dem Gehäuse derselben, kombiniert werden kann, beispielsweise von außen hieran angesetzt werden kann oder in dieses integriert werden kann. Das Modul kann vorgefertigt werden durch den Hersteller das Grundmoduls der Liftachsventileinheit oder durch einen anderen Hersteller. Möglich ist auch, dass die Liftachsventileinheit in zwei Varianten vertrieben wird, nämlich einerseits mit dem Modul, welches die Heizeinrichtung ausbildet, für Länder, in welchen niedrige Temperaturen zu erwarten sind, sowie andererseits ohne modulare Heizeinrichtung für eine Nutzung des Nutzfahrzeugs mit der Liftachsventileinheit in Ländern oder Gebieten oder einer Saison, in welchen/welcher keine niedrigen Temperaturen zu erwarten sind. Möglich ist auch, dass ein- und dasselbe Fahrzeug durch Ergänzung der modularen Heizeinrichtung (temporär oder permanent) nachgerüstet wird, um dieses für niedrige Temperaturen nutzbar zu machen.

Für die Ausgestaltung der Heizeinrichtung und Kopplung oder Integration derselben mit anderweitigen Bauelementen der Liftachsventileinheit gibt es vielfältige Möglichkeiten. Gemäß einer bevorzugten Ausgestaltung der Erfindung besitzt ein Gehäuse der Liftachsventileinheit, beispielsweise eine Außenwandung oder eine im inneren angeordnete Zwischenwandung, eine Ausnehmung. Die Heizeinrichtung verfügt über ein Heizelement. Das Heizelement ist in der Ausnehmung des Gehäuses angeordnet, sodass ein Transfer von Wärme von dem Heizelement zu dem Gehäuse möglich ist. Um einen möglichst guten Transfer von dem Heizelement zu dem Gehäuse zu ermöglichen, kann es von Vorteil sein, wenn das Heizelement im Bereich der Ausnehmung unter Minimierung eines Luftspaltes oder Gewährleistung einer Anpresskraft oder Pressung eng an dem Gehäuse anliegt. Möglich ist auch, dass der Transfer zwischen Heizelement und Gehäuse verbessert ist, indem zwischen Heizelement und dem Gehäuse ein Zwischenkörper wie ein thermisches Kontaktelement oder ein mit Montage eingebrachtes und aushärtendes Fluid oder pastöses Medium, ein elastischer Ausgleichskörper oder ähnliches zwischengeordnet ist.

Ebenfalls möglich ist, dass die Heizeinrichtung ein Heizelement in Ausbildung als eine Art "Heizmatte" aufweist. Diese Heizmatte kann dann mit einer vergrößerten Kontaktfläche an einer Anlagefläche des Gehäuses, beispielsweise von außen an eine Außenwandung des Gehäuses oder auch integriert in das Innere des Gehäuses an der Innenseite der äußeren Gehäusewandung oder einer Zwischenwandung anliegen, wodurch ein guter Transfer von Wärme gewährleistet werden kann.

Grundsätzlich kann die Anordnung eines Heizelementes an beliebiger Stelle der Liftachsventileinheit erfolgen, wobei dann auch ein Transfer von Wärme von dem Heizelement zu Ventilelementen der Liftachsventileinheit, Gehäusebohrungen für die Ventilelemente u. ä. erfolgen kann durch die Druckluft in der Liftachsventileinheit und/oder durch Konvektion des Gehäuses oder anderer pneumatischer Bauelemente der Liftachsventileinheit.

Sollen entsprechende Übertragungswege möglichst kurz gehalten werden, umfasst die Erfindung auch Ausgestaltungen, bei welchen einem zu erwärmenden Ventilelement unmittelbar benachbart ein Heizelement zugeordnet ist. Sind mehrere Ventilelemente zu erwärmen, ist auch möglich, dass jedem Ventilelement unmittelbar benachbart ein eigenes Heizelement zugeordnet ist. In besonderer Ausgestaltung der Erfindung ist ein Heizelement zwischen zumindest zwei Ventilelementen der Liftachsventileinheit angeordnet, wodurch ein Heizelement multifunktional zur Erwärmung der mindestens zwei Ventilelemente eingesetzt werden kann, ohne dass unnötig lange Übertragungswege für die Wärme des Heizelements zu den Ventilelementen in Kauf genommen werden müssen. Hierbei kann das Heizelement in einer gemeinsamen Ebene von zwei Ventilelementen, insbesondere mittig zwischen zwei Längs- oder Betätigungsachsen derselben, angeordnet sein. Drei oder mehr Ventilelemente, die erwärmt werden sollen, können auch räumlich um ein gemeinsames Heizelement angeordnet sein.

Für die Betätigung der Heizeinrichtung gibt es vielfältige Möglichkeiten. Um einige nicht beschränkende Beispiele zu nennen, kann die Betätigung der Heizeinrichtung manuell durch den Fahrer oder eine Bedienperson erfolgen, wobei der Fahrer oder die Bedienperson selber entscheiden kann, ob eine Betätigung der Heizeinrichtung erforderlich ist, was auf Grundlage einer gefühlten oder gemessenen Außentemperatur erfolgen kann oder auch für den Fall, dass der Fahrer beobachtet, dass die Liftachsventileinheit nicht ordnungsgemäß arbeitet. Weiterhin möglich ist, dass dem Fahrer je nach Umgebungstemperatur automatisch eine Information gegeben wird, dass die Betätigung der Heizeinrichtung ratsam ist, beispielsweise über ein akustisches oder optisches Warnsignal. In diesen Fällen würde die manuelle Betätigung der Heizeinrichtung eine elektrische Leistungsversorgung der Heizeinrichtung aktivieren. Ebenfalls möglich ist die automatische Beaufschlagung der elektrischen Leistungsversorgung über eine extern von der Liftachsventileinheit angeordnete Steuereinheit, die die Heizeinrichtung betätigt, wenn eine erfasste Umgebungstemperatur einen Schwellwert unterschreitet. Auch möglich ist die automatische Betätigung der Heizeinrichtung, wenn sich die Notwendigkeit aus der Funktion ergibt, beispielsweise weil die Liftachsventileinheit nicht einen erforderlichen oder angesteuerten Betriebszustand einnimmt.

Für die Betätigung der Heizeinrichtung kann ein Temperatursensor an beliebiger Stelle des Nutzfahrzeugs, insbesondere in oder an der Liftachsventileinheit, angeordnet sein. In weiterer Ausgestaltung der Erfindung weist die Heizeinrichtung selber einen Temperatursensor auf. Hierdurch ergibt sich eine besonders kompakte Ausgestaltung, in welcher auch eine Zusammenfassung der elektrischen Komponenten der Heizeinrichtung und des Temperatursensors möglich ist. Ist die Heizeinrichtung modular ausgebildet und lediglich im Bedarfsfall Bestandteil der Liftachsventileinheit, kann durch dieses Modul gleichzeitig das Heizelement und der Temperatursensor bereitgestellt werden, wodurch sich ein Fertigungs-, Bevorratungs- und Montageaufwand reduzieren kann.

In weiterer Ausgestaltung ist der Temperatursensor mit einem Temperaturschalter ausgebildet, welcher das oder ein Heizelement aktiviert, wenn ein Aktivierungs-Schwellwert der Temperatur des Temperaturschalters (und damit der unmittelbar benachbarten Bauelemente der Liftachsventileinheit) unterschritten ist. Ein derartiger Temperaturschalter stellt eine besonders kostengünstige, aber betriebssichere Ausgestaltung eines Temperatursensors dar. Beispielsweise kann der Temperaturschalter mit einem Bimetall-Schaltelement in an sich bekannter Ausgestaltung ausgebildet sein. Möglich ist hierbei, dass ein von der Betriebsstellung des Temperaturschalters abhängiges Ausgangssignal einer Steuereinheit der Liftachsventileinheit oder einer externen Steuereinheit zugeführt wird oder genutzt wird, um ein weiteres Schaltelement der Heizeinrichtung zu betätigen, wodurch dann letztendlich das Heizelement aktiviert wird.

Für eine besonders einfache Ausgestaltung unterbricht der Temperaturschalter der Heizeinrichtung eine ständig erfolgende elektrische Leistungsversorgung der Heizeinrichtung und des Heizelements, sofern die Temperatur oberhalb des Aktivierungs-Schwellwerts liegt. Mit Unterschreitung des Aktivierungs-Schwellwerts erfolgt (ohne zwingende weitere zusätzliche Bauelemente) die elektrische Beaufschlagung des Heizelementes, womit die Erwärmung herbeigeführt werden kann. Für diese Ausgestaltungsform muss lediglich eine elektrische Leistungsversorgung für die Heizeinrichtung der erfindungsgemäßen Liftachsventileinheit bereitgestellt werden, also auch lediglich ein entsprechender Anschluss an der Liftachsventileinheit oder der modularen Heizeinrichtung vorgesehen werden, ohne dass extern von der Liftachsventileinheit weitere Maßnahmen zur Aktivierung und Deaktivierung zu treffen sind.

Von Vorteil ist hierbei, wenn der Temperaturschalter das Heizelement deaktiviert, wenn ein Deaktivierungs-Schwellwert der Temperatur überschritten ist. Hierbei ist der Deaktivierungs-Schwellwert der Temperatur größer als der Aktivierungs-Schwellwert der Temperatur, sodass eine Art Hysterese für die Schaltstellungen des Temperaturschalters in Abhängigkeit von der Temperatur gegeben ist. Erfindungsgemäß kann somit gewährleistet werden, dass mit Unterschreiten des Aktivierungs-Schwellwerts das Heizelement aktiviert wird, womit eine Erwärmung der Liftachsventileinheit und damit auch des Temperaturschalters erfolgt. Überschreitet mit derart aktivierter Erwärmung die Temperatur den Deaktivierungs-Schwellwert der Temperatur, für welchen der ordnungsgemäße Betrieb der Liftachsventileinheit gewährleistet ist, wird automatisch die Heizeinrichtung deaktiviert, um auf eine zu große Erwärmung zu vermeiden und/oder die elektrische Leistungsaufnahme auf das erforderliche Maß zu reduzieren.

Eine besondere Maßnahme trägt der Beobachtung Rechnung, dass es für die Betriebssicherheit des Nutzfahrzeugs, die Gewährleistung der Bremswirkung und den Verschleiß der Reifen kritischer ist, wenn die Liftachse wegen der niedrigen Temperatur nicht abgesenkt wird, obwohl dies infolge der Beladung des Nutzfahrzeugs angezeigt wäre, als dass die Liftachse nicht angehoben wird, obwohl dies angesichts der Beladung erforderlich wäre. Auf Grundlage dieser Beobachtung minimiert die Erfindung die elektrische Leistungsaufnahme durch die Heizeinrichtung, indem eine beliebig geartete Steuereinrichtung Einsatz findet, die die Aktivierung der Heizeinrichtung von der Bedingung abhängig macht, dass sich die Liftachsventileinheit in einer Schaltstellung befindet, in welcher die Liftachse angehoben ist.

Alternativ oder kumulativ kann die Betätigung der Heizeinrichtung von beliebigen anderen Betriebs- und Umgebungsbedingungen abhängig gestaltet werden. Gemäß einem weiteren Vorschlag der Erfindung ist die Betätigung der Heizeinrichtung abhängig davon, dass die Zündung aktiviert ist, wodurch vermieden ist, dass eine Belastung einer Fahrzeugbatterie durch die Heizeinrichtung erfolgt, ohne dass infolge der laufenden Brennkraftmaschine eine Nachspeisung von Energie zu der Batterie erfolgt.

Grundsätzlich ist die Leistungsversorgung der Heizeinrichtung beliebig, sodass diese von einer separat hierfür vorgesehenen Batterie oder einem Akkumulator, einer in die Heizeinrichtung oder die Liftachsventileinheit integrierten Batterie oder einem derart integrierten Akkumulator erfolgen kann. Ebenfalls möglich ist die Speisung der Heizeinrichtung von einer Batterie und/oder Lichtmaschine des Nutzfahrzeugs.

Während grundsätzlich die Anordnung mindestens eines Heizelements an beliebiger Stelle der Liftachsventileinheit möglich ist, schlägt die Erfindung in weiterer Ausgestaltung vor, (mindestens) ein Heizelement in einem Dämpfungsbehälter der Liftachsventileinheit anzuordnen. Die Erfindung macht hier den Ort des Dämpfungsbehälters als besonders geeigneten Ort mit unter Umständen vorhandenem Einbauraum aus. Andererseits kann mit der Anordnung des Heizelements in dem Dämpfungsbehälter eine Konvektion von dem Heizelement über die Anbindung an die den Dämpfungsbehälter begrenzenden Wandungen und/oder eine Erwärmung der Druckluft in dem Dämpfungsbehälter mit dem Transport der derart erwärmten Druckluft zu den zu erwärmenden Ventilelementen genutzt werden.

Ein multifunktionales Heizelement ergibt sich, wenn dieses zusätzlich zu seiner zuvor beschriebenen Funktion bei Integration in den Dämpfungsbehälter auch zur Bildung einer Drossel bzw. zur Begrenzung eines Drosselquerschnitts genutzt ist.

Die erfindungsgemäße Heizeinrichtung kann einen Steueranschluss zur Aktivierung und Deaktivierung derselben, einen Anschluss für eine elektrische Leistungsversorgung und/oder einen Ausgangsanschluss für ein Betriebssignal der Heizeinrichtung, das Signal eines Temperatursensors oder Temperaturschalters u. ä. besitzen. Die genannten Anschlüsse können als einzelne Anschlussstecker oder kombinierter Anschlussstecker ausgebildet sein. Der mindestens eine Anschluss kann mit einem entsprechenden Anschluss der Liftachsventileinheit verbunden sein, wobei hierüber eine Verbindung mit einem Ein- und Ausgangsanschluss der Liftachsventileinheit erfolgen kann. Ebenfalls möglich ist, dass eine Verbindung des mindestens einen Anschlusses der Heizeinrichtung ohne weitere elektrische Kopplung mit der Liftachsventileinheit mit anderweitigen elektrischen und elektronischen Bauelementen des Nutzfahrzeugs erfolgt. Ebenfalls möglich ist eine Kommunikation der Heizeinrichtung mit einem CAN in beliebiger bekannter Ausgestaltung.

Es versteht sich, dass in einer erfindungsgemäßen Heizeinrichtung auch mehrere Heizelemente gleicher oder unterschiedlicher Bauart zum Einsatz kommen können, ohne dass hierdurch der Rahmen der vorliegenden Erfindung verlassen wird.

Ein weiterer Aspekt der vorliegenden Erfindung betrifft die erstmalige Verwendung einer Heizeinrichtung, mittels welcher bedarfsgerecht eine Erwärmung einer Liftachsventileinheit eines Nutzfahrzeugs mit Luftfederung durchführbar ist und die zuvor erläuterten Vorteile herbeigeführt werden können.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.

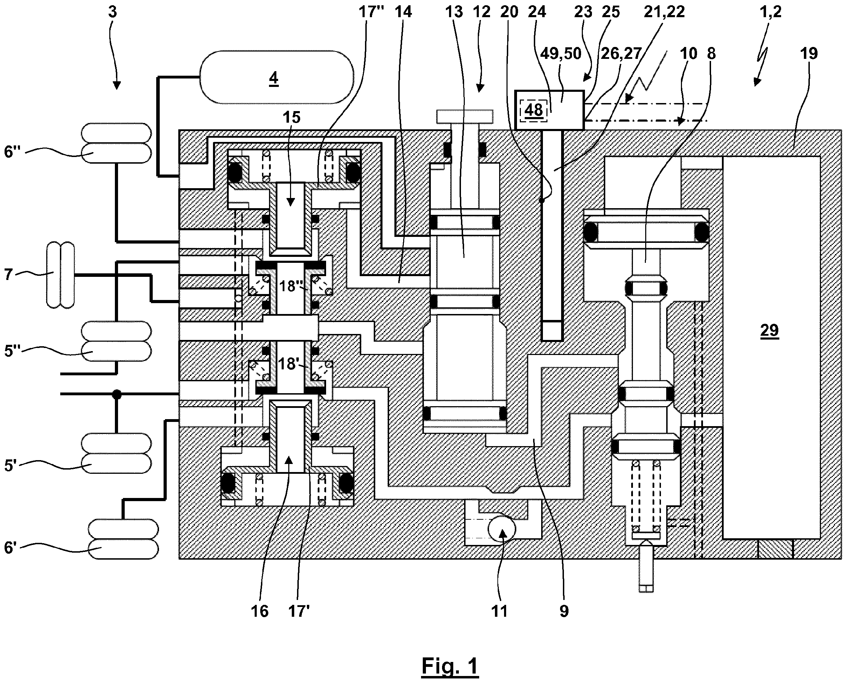

- **Fig. 1 bis** 4: zeigen unterschiedliche Ausgestaltungsformen einer erfindungsgemäßen Liftachsventileinheit in schematischer Darstellung mit Integration in eine Luftfederungsanlage eines Nutzfahrzeugs mit Liftachse.

### FIGURENBESCHREIBUNG

Die vorliegende Erfindung kann grundsätzlich Einsatz finden im Rahmen von Liftachsventileinheiten beliebiger Bauart zur Gewährleistung der grundsätzlichen Liftachsfunktion. Aus diesem Grund sind in den **Fig. 1 bis 4** Liftachsventileinheiten 1 dargestellt, bei welchen ein Grundmodul 2 oder Grundkörper zur Gewährleistung der Liftachsfunktionen unterschiedlich ausgestaltet ist. Hierbei entspricht das Grundmodul 2 der Liftachsventileinheit 1 gemäß Fig. 1 dem Liftachsventil, wie dieses im Detail in DE 43 14 994 C1 der Anmelderin beschrieben ist. Hinsichtlich weiterer Details oder Ausführungen grundsätzlich im Rahmen der Erfindung einsetzbarer Grundmodule 2 der Liftachsventileinheit 1 wird insbesondere auf die Druckschriften DE 43 14 994 C1, DE 44 10 892 C2 und DE 40 37 461 C1 verwiesen.

Eine Luftfederanlage 3 des Nutzfahrzeugs ist gemäß Fig. 1 gebildet mit einem Druckluftbehälter 4, einer erfindungsgemäßen Liftachsventileinheit 1, Luftfederbälgen 5', 5" unterschiedlicher Seiten mindestens einer Achse, welche permanent wirksam ist, Luftfederbälgen 6', 6" unterschiedlicher Seiten einer Liftachse, die zur Wirkung kommen in abgesenktem Zustand der Liftachse, und mindestens einem Liftbalg 7, über welche die Liftachse angehoben und abgesenkt werden kann. Die Liftachsventileinheit 1 aktiviert die Liftachse mit einer Entlüftung des Liftbalgs 7 und einer Belüftung der Luftfederbälge 6', 6" im Fall der Notwendigkeit je nach Beladungszustand. Bei Aktivierung der Liftachse erfolgt über die Liftachsventileinheit 1 eine pneumatische Verbindung der Luftfederbälge 5', 5" mit den Luftfederbälgen 6', 6", um eine geeignete Verteilung der Achslast vorzunehmen. Für diese Funktionen (und ggf. ergänzende Funktionen) der Liftachsventileinheit 1 erfolgt eine Betätigung pneumatischer Bauelemente der Liftachsventileinheit 1, welche für das Ausführungsbeispiel gemäß Fig. 1 ausschließlich pneumatisch erfolgt, ohne dass dieses zwingend der Fall sein muss. Bei den Bauelementen, deren Betriebsstellung für die Gewährleistung der unterschiedlichen Funktionen der Liftachsventileinheit auch bei niedrigen Temperaturen veränderbar sein muss, handelt es sich vorzugsweise um folgende Bauelemente:
- Ein Regelventil 10 mit einem Regelkolben 8, dessen Betriebsstellung der dargestellten ersten Betriebsstellung entspricht, wenn die Beladung des Nutzfahrzeugs und damit die pneumatische Beaufschlagung der Luftfederbälge 5', 5" unterhalb eines Schwellwerts liegt, während der Regelkolben 8 eine zweite Betriebsstellung einnimmt, wenn die Beladung und damit die pneumatische Beaufschlagung der Luftfederbälge 5', 5" oberhalb des genannten Schwellwerts liegt. In der ersten Betriebsstellung entlüftet der Regelkolben 8 eine Steuerleitung 9, während die Steuerleitung 9 in der zweiten Betriebsstellung belüftet wird, was gemäß dem dargestellten Ausführungsbeispiel dadurch erfolgt, dass die Steuerleitung 9 mit den Luftfederbälgen 5', 5" verbunden wird, was aber auch mit Verbindung mit einer anderen Druckluftquelle erfolgen kann.
- Ein Rückschlagventil 11, welches der Verbindungsleitung zwischen dem Luftfederbalg 5" und dem Regelventil 10 parallel geschaltet ist.
- Ein Achsliftventil 12 mit einem Schaltkolben 13, welcher auch manuell betätigbar ist. Der Schaltkolben 13 ist mit dem Druck in der Steuerleitung 9 beaufschlagt, sodass mit Veränderung der Betriebsstellung des Regelventils 10 eine Herbeiführung einer veränderten Betriebsstellung des Achsliftventils 12 möglich ist, welche in der dargestellten ersten Betriebsstellung des Schaltkolbens 13 bewirkt, dass eine Liftachssteuerleitung 14 mit dem Druckluftbehälter 4 verbunden ist, während in der in Fig. 1 nicht dargestellten zweiten Betriebsstellung des Schaltkolbens 13 die Liftachssteuerleitung 14 mit einem Entlüftungsanschluss verbunden ist.
- Umschaltventile 15, 16, welchen jeweils der Druck der Liftachssteuerleitung 14 zugeführt ist und welche einerseits die pneumatische Beaufschlagung des Liftbalgs 7 steuern. Andererseits ist jeweils ein Umschaltventil 15, 16 zuständig für die pneumatische Beaufschlagung eines Luftfederbalgs 6', 6" einer Fahrzeugseite. Die Umschaltventile 15, 16 besitzen jeweils einen Umschaltkolben 17', 17" sowie einen Doppelventilkörper 18', 18", deren Betriebsstellung sich je nach Druck in der Liftachssteuerleitung 14 und in den Luftfederbälgen 5', 5", 6', 6" ändert.

Hinsichtlich weiterer Details und Abwandlungen wird auf die Druckschriften DE 40 37 461 C1, DE 43 14 994 C1 und DE 44 10 892 C2 verwiesen.

Das Grundmodul 2 ist gebildet mit einem in Fig. 1 lediglich schematisch dargestellten Gehäuse 19, welches mehrteilig mit Zwischenwänden u. ä. gebildet sein kann und eine beliebige Geometrie besitzen kann. Während in Fig. 1 die genannten pneumatischen Elemente in einer Ebene angeordnet sind, versteht der Fachmann, dass diese zur Herbeiführung einer kompakten Ausgestaltung auch beliebig räumlich angeordnet sein können. Ebenfalls möglich ist, dass das Grundmodul 2 mit mehreren Teilmodulen ausgebildet sein kann, die ineinander gesetzt sind und/oder aneinander angesetzt, beispielsweise aneinander angeflanscht sind, wobei mit dem Ansetzen oder Anflanschen auch eine Herstellung und Abdichtung erforderlicher pneumatischer Leitungsverbindungen erfolgen kann.

Das Gehäuse 19 verfügt über eine nach außen offenen Ausnehmung 20, welche sich in das Innere des Gehäuses 19 erstreckt. Beispielsweise handelt es sich bei der Ausnehmung 20 um eine Bohrung einer Wandung des Gehäuses 19. Ebenfalls möglich ist, dass die Ausnehmung 20 gebildet ist im Bereich einer Trennfuge von zwei Gehäuseteilen, wobei die Ausnehmung 20 insbesondere hälftig von den beiden Gehäuseteilen begrenzt ist. In die Ausnehmung 20 ist ein Heizelement 21, hier ein Heizstab 22, einer Heizeinrichtung 23 eingesetzt. Das Heizelement 21 bildet einen geringen Luftspalt oder sogar eine möglichst große Kontaktfläche mit dem Gehäuse 19 in dem Begrenzungsbereich der Ausnehmung 20 aus. Stirnseitig des Heizelements 21 kann ein Leervolumen in der Ausnehmung 20 verbleiben, wobei auch möglich ist, dass dieses Leervolumen mit einem Druckluftkanal oder einer Druckluftkammer der Liftachsventileinheit 1 pneumatisch verbunden ist, sodass die Druckluft mit der Stirnseite des Heizelements 21 in Wirkverbindung tritt. Die Heizeinrichtung 23 verfügt über einen mit dem Heizelement 21 verbundenen, insbesondere das Heizelement 21 tragenden, Grundkörper 24, der alternativ oder kumulativ folgenden beispielhaften Funktionen dienen kann:
- Ausbildung oder Aufnahme eines Anschlusses 25 für eine elektrische Leistungsversorgung, eines Steueranschlusses 26 für die Heizeinrichtung 23 und eines Ausgangsanschlusses 27, über welchen ein Betriebszustand der Heizeinrichtung 23 an andere Bauelemente oder Steuereinheiten übertragen werden kann.
- Aufnahme einer Steuereinheit 48, insbesondere einer ECU.
- Gewährleistung einer Befestigung der Heizeinrichtung 23 an dem Gehäuse 19. Beispielsweise kann in nicht dargestellter Weise der Grundkörper 24 über Bohrungen oder einen Flansch verfügen, mittels dessen ein Anschrauben der Heizeinrichtung 23 an das Gehäuse 19 möglich ist.

Gemäß **Fig. 1** verfügen der Regelkolben 8 und der Schaltkolben 13 über parallel zueinander orientierte Längs- und Symmetrieachsen sowie Betätigungsachsen. Das Heizelement 21 und die Ausnehmung 20 erstrecken sich parallel zu den Längs- und Betätigungsachsen des Regelkolbens 8 und des Schaltkolbens 13 in der durch die Längs- und Symmetrieachsen sowie Betätigungsachsen des Regelkolbens 8 und des Schaltkolbens 13 aufgespannten Ebene. Die Ausnehmung 20 und das Heizelement 21 sind vorzugsweise ungefähr mittig zwischen diesen Längs- und Betätigungsachsen angeordnet. Mit Erwärmung des Heizelements 21 erfolgt der Übertritt von Wärme von dem Heizelement 21 über die Begrenzung der Ausnehmung 20 zu dem Gehäuse 19, sodass eine Erwärmung des Gehäuses 19 und damit auch des Regelventils 10 und des Achsliftventils 12 erfolgen. Die erforderliche Zeitdauer für eine gewünschte Temperaturänderung kann hierbei von den Materialeigenschaften, den Wärmekapazitäten, die Übertragungsquerschnitten und der Leistung des Heizelements 21 abhängen.

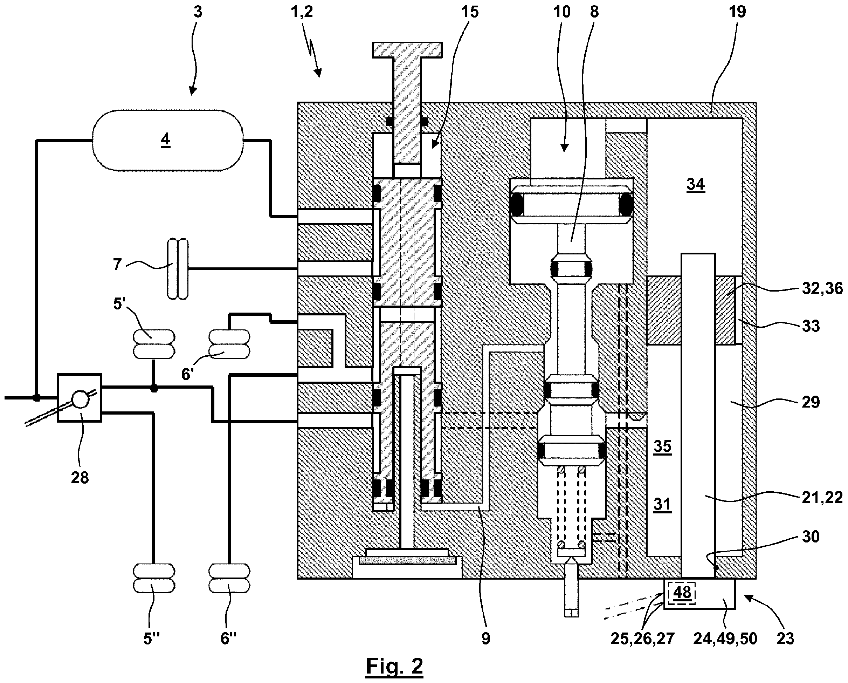

**Fig. 2** zeigt eine Ausgestaltungsform der Erfindung, bei welcher das Grundmodul 2 der Liftachsventileinheit 1 abweichend zu Fig. 1 ohne Achsliftventil 12 ausgebildet ist. Vielmehr steuert hier das Regelventil 10 ohne Zwischenschaltung eines Achsliftventils 12 unmittelbar ein einziges Umschaltventil 15 an. Darüber hinaus zu erkennen ist hier eine Beaufschlagung der Luftfederbälge über ein hier mechanisches Niveauregelventil 28. Eine manuelle Betätigung des Achsliftventils 12 kann die eingangs beschriebene Anfahrhilfe im Winter gewährleisten. Für das Ausführungsbeispiel gemäß Fig. 2 ist die manuelle Betätigung zur Gewährleistung einer Anfahrhilfe unmittelbar durch einen Betätigungsknopf an dem Umschaltventil 15 ermöglicht.

Für die dargestellten Ausführungsformen verfügt die Liftachsventileinheit 1 über einen Dämpfungsbehälter 29, welcher pneumatisch mit dem Luftfederbalg 5' bzw. dem Ausgang des Niveauregelventils 28 verbunden ist und über eine Drossel 33 den Regelkolben 8 stirnseitig beaufschlagt. Der Dämpfungsbehälter 29 dient der Entkopplung der pneumatischen Betätigung des Regelkolbens 8 von kurzfristigen dynamischen Schwankungen des Drucks in dem Luftfederbalg 5'. Gemäß Fig. 2 ist das Heizelement 21 in den Dämpfungsbehälter 29 integriert. Auch hier ist der Grundkörper 24 an dem Gehäuse 19 befestigt. Das Heizelement 21 erstreckt sich durch eine Durchgangsbohrung 30 einer Wandung des Gehäuses 19 in einen Innenraum 31, wo das Heizelement 21 im Bereich seiner Mantelfläche in Wirkverbindung mit der Druckluft tritt und diese erwärmen kann. Die erwärmte Druckluft kann dann über die dargestellten pneumatischen Leitungsverbindung zu den anderen Bauelementen der Liftachsventileinheit 1 gelangen. In dem dem Grundkörper 24 abgewandten Endbereich erstreckt sich das Heizelement 21 durch eine Zwischenwand 32 des Dämpfungsbehälters 29. Mit der Zwischenwand 32, hier mit einem sich ergebenden Spalt zwischen der Zwischenwand 32 und dem Gehäuse 19, ist die Drossel 33 gebildet. Die Drossel 33 trennt Kammern 34, 35 des Dämpfungsbehälters 29 und drosselt den

Übertritt von Druckluft zwischen den Kammern 34, 35. Der Luftfederbalg 5' ist mit der Kammer 35 pneumatisch verbunden und über die Drossel 33 auch mit der Kammer 34 verbunden. Die Kammer 34 beaufschlagt eine stirnseitige Steuerfläche des Regelkolbens 8, während eine andere Steuerfläche mit dem Druck in der Kammer 35 bzw. dem Druck des Luftfederbalgs 5' beaufschlagt ist, wobei die Betriebsstellung des Regelkolbens 8 von den beiden genannten Drücken abhängig ist. Für das dargestellte Ausführungsbeispiel ist die Zwischenwand 32 des Dämpfungsbehälters 29 von einem Wärmeübertragungskörper 36 gebildet, der Teil der Heizeinrichtung 23 ist, an einer Innenwandung des Dämpfungsbehälters 29 und insbesondere des Gehäuses 19 abgestützt oder befestigt ist sowie die Drossel 33 bildet oder einen Drosselquerschnitt der Drossel 33 mit begrenzt. Der Wärmeübertragungskörper 36 gewährleistet auch einen Übertritt von Wärme von dem Heizelement 21 über den Kontakt mit der Innenwandung des Dämpfungsbehälters 29 zu dem Gehäuse 19 und damit zu weiteren pneumatischen Bauelementen, insbesondere dem Regelventil 10.

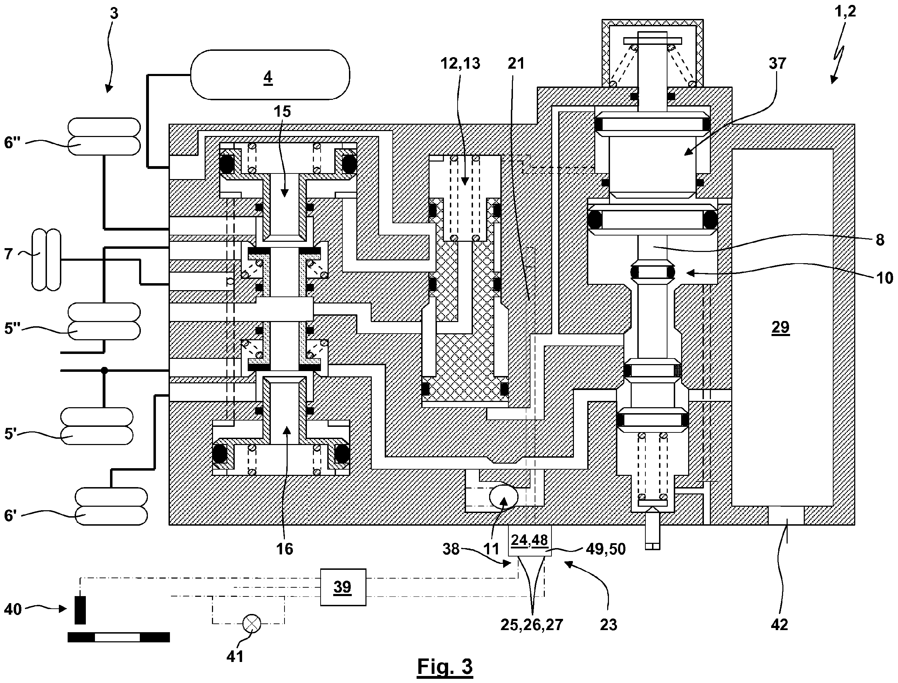

**Fig. 3** zeigt grundsätzlich eine Fig. 1 entsprechende Ausgestaltung der Liftachsventileinheit 1. Allerdings ist hier das Regelventil 10 mit einem zusätzlichen pneumatisch gesteuerten Belastungskolben 37 gebildet. Hinsichtlich weiterer Details zu dem Belastungskolben 37 wird auf die entsprechenden Ausführungsformen in DE 40 37 461 C1, DE 43 14 994 C1 und DE 44 10 892 C2 verwiesen. Für diese Ausführungsform bilden die Anschlüsse 25, 26, 27 eine Schnittstelle 38 für eine Steuereinheit 39, insbesondere eine ECU. Diese steuert die elektrische Leistungsversorgung der Heizeinrichtung, die Aktivierung und Deaktivierung derselben und kann Ausgangssignale der Heizeinrichtung 23 verarbeiten. Vorzugsweise kommuniziert die Steuereinheit 39 über mindestens einen Stecker mit der Schnittstelle 38 und damit der Heizeinrichtung 23. Die Steuereinheit 39 empfängt ein Signal eines Drehzahlsensors 40, insbesondere eines ABS-/EBS-Sensors in Verbindung mit einem entsprechenden Polrad. Somit liegt der Steuereinheit 39 ein Geschwindigkeitssignal eines Fahrzeugrads vor. Detektiert ein Sensor, beispielsweise ein in die Heizeinrichtung 21 integrierter Temperatursensor oder ein Temperaturschalter, der Steuereinheit 39 ein für einen sicheren Betrieb der Liftachsventileinheit 1 zu niedrige Temperatur und signalisiert der Drehzahlsensor 40 die Aufnahme eines Fahrbetriebs, kann die Steuereinheit 39 über eine geeignete optische oder akustische Anzeige, insbesondere eine Warnleuchte 41, dem Fahrer zur Kenntnis bringen, dass der Betrieb der Liftachsventileinheit 1 unter Umständen nicht möglich ist. Es versteht sich, dass auch unmittelbar der Steuereinheit 39 ein pneumatischer Druck und/oder eine Stellung eines Ventilelements der Liftachsventileinheit 1 zugeführt werden kann, woraus die Steuereinheit 39 unmittelbar auf eine fehlerhafte Funktion der Liftachsventileinheit 1 schließen kann und geeignete Maßnahmen wie die Aktivierung der Heizeinrichtung 23 und/oder die Warnung des Fahrers einleiten kann. Ebenfall möglich ist, dass auch sonstige Kommunikationsmöglichkeiten wie eine Kommunikation über das CAN oder PLC genutzt werden können, um die genannten Daten auszutauschen, insbesondere um den Fahrer zu informieren. Für das dargestellte Ausführungsbeispiel gemäß Fig. 3 verfügt der Dämpfungsbehälter 29 über einen Ausgangsanschluss 42, über welchen dieser mit weiteren Ventilen, beispielsweise mit einem Absperrhahn oder einen Prüfanschluss, verbunden sein kann.

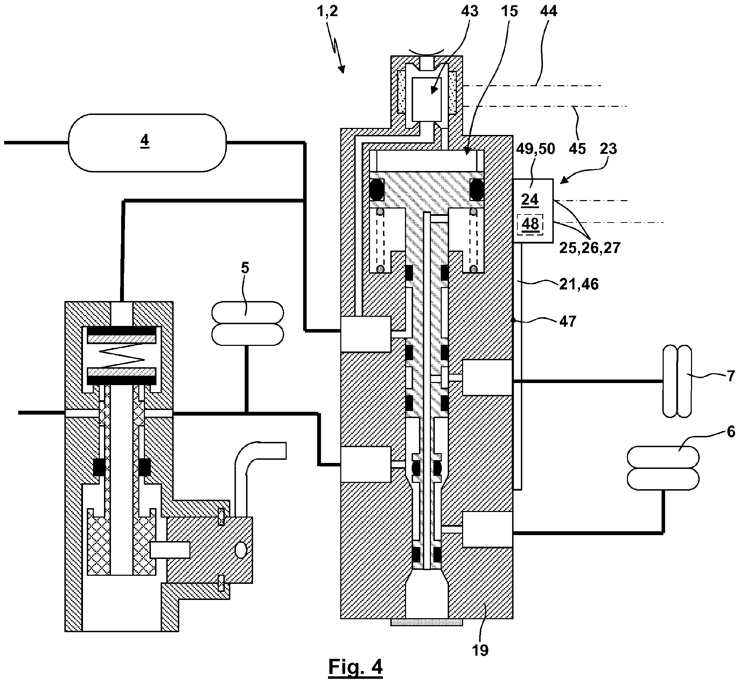

**Fig. 4** zeigt eine abweichende Ausgestaltungsform einer Liftachsventileinheit 1, in welcher ein Umschaltventil 15 elektrisch betätigt wird. Hier verfügt die Liftachsventileinheit 1 über ein elektrisch betätigtes Magnetventil 43, welches über Steuerleitungen 44, 45 von einer nicht dargestellten Steuereinheit angesteuert wird. Das Magnetventil 43 be- und entlüftet eine Steuerkammer zur Umschaltung des Umschaltventils 15 je nach Steuersignal in den Steuerleitungen 44, 45. Für das in Fig. 4 dargestellte Ausführungsbeispiel ist die Heizeinrichtung 23 mit einem Heizelement 21 in Form einer Heizmatte 46 ausgebildet, welche zur Gewährleistung der erforderlichen Wärmeübertragungsflächen möglichst großflächig anliegt an einer Anlagefläche 47, die von der Außenseite des Gehäuses 19 ausgebildet ist. Die Applikation der Heizmatte 46 kann vereinfacht werden, wenn die Anlagefläche 47 des Gehäuses 19 eben oder einfach gekrümmt ausgebildet ist. Auch in diesem Fall kommuniziert die Heizeinrichtung 23 über Anschlüsse 25-27 mit der Steuereinheit oder elektrischen Leistungsversorgung, wobei auch möglich ist, dass eine einzige gemeinsame Steuereinheit sowohl für die Ansteuerung der Heizeinrichtung 23 als auch für die Ansteuerung des Magnetventils 43 zuständig ist. Während gemäß Fig. 4 die Heizmatte 46 an der Außenseite des Gehäuses 19 angebracht ist, kann dies selbstverständlich auch an einer Innenseite des Gehäuses oder einer Zwischenwand desselben erfolgen.

Beispielsweise verfügt die erfindungsgemäße Heizeinrichtung 23 über eine Heizleistung von 120 Watt, wobei auch abweichende Heizleistungen, insbesondere 200 Watt, 180 Watt, 150 Watt, 140 Watt, 130 Watt, 110 Watt, 100 Watt, 80 Watt oder 60 Watt möglich sind. Vorzugsweise erfolgt der Betrieb der Heizeinrichtung 23 aus dem Bordnetz mit 12 Volt, wobei auch beliebig anderweitige Speisespannungen möglich sind, insbesondere 24 Volt. Beispielsweise kann eine Betätigung der Heizeinrichtung 23 erfolgen, wenn ein Aktivierungs-Schwellwert von - 40°C unterschritten wird. In einer alternativen Ausgestaltung beträgt der Aktivierungs-Schwellwert für die Temperatur, bei welcher die Heizeinrichtung 23 aktiviert wird, -20°, während ein Deaktivierungs-Schwellwert für die Temperatur, bei welcher das Heizelement deaktiviert wird, - 15°C beträgt. Es versteht sich, dass beliebige andere Aktivierungs-Schwellwerte und Deaktivierungs-Schwellwerte ebenfalls möglich sind.

Auch möglich ist, dass die Aktivierung der Heizeinrichtung 23 abhängig davon gemacht wird, wie groß die Beladung des Fahrzeugs ist: Dieser Ausgestaltung liegt der Gedanke zugrunde, dass für an sich erforderliches Absenken der Liftachse das Unterbleiben des Absenkens infolge der niedrigen Temperatur unter Umständen noch akzeptiert wird, wenn die Beladung um eine vorgegebene Spanne größer ist als die Beladung, für die an sich die Absenkung der Liftachse erfolgen sollte, während für tatsächlich sehr hohe Beladungen dann mittels der Heizeinrichtung 23 das Absenken auch bei niedrigen Temperaturen gewährleistet werden soll.

Im Rahmen der Erfindung können auch Heizeinrichtungen, beispielsweise eine so genannte elektrische PTC-Heizung (positive temperature coefficient) mit selbsttätiger Regelung, in ein Liftachsventil integriert werden, wie diese gemäß DE 10 2007 005 771 A1 und DE 10 2006 034 077 A1 für einen anderen Einsatzzweck, nämlich einen Filter insbesondere für Harnstoff oder Kraftstoff vorgeschlagen worden sind.

Möglich ist, dass die Heizeinrichtung 23 lediglich mit der elektrischen Leistungsversorgung verbunden ist und somit ständig, ggf. in Abhängigkeit von der Betätigung der Zündung, mit elektrischer Leistung versorgt wird. In diesem Fall schlägt die Erfindung vor, dass in die Heizeinrichtung 23, insbesondere in den Grundkörper 24, ein Temperatursensor 49, vorzugsweise ein Temperaturschalter 50 oder ein Thermostat, integriert ist, der mit Unterschreiten des Aktivierungs-Schwellwerts der Temperatur die elektrische Leistung freigibt, sodass das Heizelement 21 erwärmt wird. Ein Erwärmen des Heizelements 21 kann bis auf eine Temperatur von 650°C erfolgen. Möglich ist auch eine Aktivierung des Heizelements 21 in Abhängigkeit von einer Temperatur, die an einem Bauelement der Liftachsventileinheit 1 erfasst wird oder an beliebiger anderer Stelle in dem Nutzfahrzeug.

Die Liftachsventileinheit 1 ist als singuläres Bauelement ausgebildet und insbesondere separat von einer Druckluftaufbereitungseinrichtung und entfernt von dieser ausgebildet und angeordnet. Vorzugsweise ist die Liftachsventileinheit 1 stromabwärts eines Mehrkreisschutzventils und/oder eines der Luftfederung zugeordneten Vorratsbehälters angeordnet.

### BEZUGSZEICHENLISTE

- 1: Liftachsventileinheit
- 2: Grundmodul
- 3: Luftfederanlage
- 4: Druckluftbehälter
- 5: Luftfederbalg
- 6: Luftfederbalg
- 7: Liftbalg
- 8: Regelkolben
- 9: Steuerleitung
- 10: Regelventil
- 11: Rückschlagventil
- 12: Achsliftventil
- 13: Schaltkolben
- 14: Liftachssteuerleitung
- 15: Umschaltventil
- 16: Umschaltventil
- 17: Umschaltkolben
- 18: Doppelventilkörper
- 19: Gehäuse
- 20: Ausnehmung
- 21: Heizelement
- 22: Heizstab
- 23: Heizeinrichtung
- 24: Grundkörper
- 25: Anschluss
- 26: Steueranschluss
- 27: Ausgangsanschluss
- 28: Niveauregelventil
- 29: Dämpfungsbehälter
- 30: Durchgangsbohrung
- 31: Innenraum
- 32: Zwischenwand
- 33: Drossel
- 34: Kammer
- 35: Kammer
- 36: Wärmeübertragungskörper
- 37: Belastungskolben
- 38: Schnittstelle
- 39: Steuereinheit
- 40: Drehzahlsensor
- 41: Warnleuchte
- 42: Ausgangsanschluss
- 43: Magnetventil
- 44: Steuerleitung
- 45: Steuerleitung
- 46: Heizmatte
- 47: Anlagefläche
- 48: Steuereinheit
- 49: Temperatursensor
- 50: Temperaturschalter

## Patentansprüche

1. Liftachsventileinheit (1) für ein Nutzfahrzeug mit Luftfederung, **dadurch gekennzeichnet, dass** die Liftachsventileinheit (1) eine Heizeinrichtung (23) besitzt, mittels welcher bedarfsgerecht eine Erwärmung der Liftachsventileinheit herbeiführbar ist.

2. Liftachsventileinheit (1) nach Anspruch 1, **dadurch gekennzeichnet, dass** die Heizeinrichtung (23) als Modul ausgebildet ist.

3. Liftachsventileinheit (1) nach Anspruch 1 oder 2, **dadurch gekennzeichnet, dass** die Heizeinrichtung (23) ein Heizelement (21) aufweist, welches in einer Ausnehmung (20) eines Gehäuses (19) der Liftachsventileinheit (1) angeordnet ist.

4. Liftachsventileinheit (1) nach Anspruch 1 oder 2, **dadurch gekennzeichnet, dass** die Heizeinrichtung (23) ein Heizelement (21) aufweist, welches als Heizmatte (46) ausgebildet ist, die an einer Anlagefläche (47) des Gehäuses (19) anliegt.

5. Liftachsventileinheit (1) nach Anspruch 3 oder 4, **dadurch gekennzeichnet, dass** das Heizelement (21) zwischen zumindest zwei Ventilelementen, insbesondere zwischen einem Schaltkolben (13) und einem Regelkolben (8), der Liftachsventileinheit (1) angeordnet ist.

6. Liftachsventileinheit (1) nach einem der vorhergehenden Ansprüche, **dadurch gekennzeichnet, dass** die Heizeinrichtung (23) einen Temperatursensor (49) aufweist.

7. Liftachsventileinheit (1) nach Anspruch 6, **dadurch gekennzeichnet, dass** der Temperatursensor (49) mit einem Temperaturschalter (50) ausgebildet ist, welcher das oder ein Heizelement (21) aktiviert, wenn ein Aktivierungs-Schwellwert der Temperatur unterschritten ist.

8. Liftachsventileinheit (1) nach Anspruch 6 oder 7, **dadurch gekennzeichnet, dass** der Temperatursensor (49) mit einem Temperaturschalter (50) ausgebildet ist, welcher das oder ein Heizelement (21) deaktiviert, wenn ein Deaktivierungs-Schwellwert der Temperatur überschritten ist.

9. Liftachsventileinheit (1) nach einem der vorhergehenden Ansprüche, **dadurch gekennzeichnet, dass** eine Steuereinheit (39) vorhanden ist, welche die Heizeinrichtung (23) deaktiviert, wenn die Liftachsventileinheit (1) in einer Schaltstellung ist, in welcher die Liftachse abgesenkt ist.

10. Liftachsventileinheit (1) nach einem der vorhergehenden Ansprüche, **dadurch gekennzeichnet, dass** die Betätigung der Heizeinrichtung (23) von der Aktivierung der Zündung abhängig ist.

11. Liftachsventileinheit (1) nach einem der vorhergehenden Ansprüche, **dadurch gekennzeichnet, dass** das oder ein Heizelement (21) in einem Dämpfungsbehälter (29) angeordnet ist.

12. Liftachsventileinheit (1) nach Anspruch 11, **dadurch gekennzeichnet, dass** mit der Heizeinrichtung (23) eine Drossel (33) gebildet ist.

13. Liftachsventileinheit (1) nach einem der vorhergehenden Ansprüche, **dadurch gekennzeichnet, dass** die Heizeinrichtung (23) einen Steueranschluss (26), einen Anschluss (25) für eine elektrische Leistungsversorgung und/oder einen Ausgangsanschluss (27) besitzt.

14. Verwendung einer Heizeinrichtung (23), mittels welcher bedarfsgerecht eine Erwärmung herbeiführbar ist, für eine Liftachsventileinheit (1) eines Nutzfahrzeugs mit Luftfederung.

## Claims

1. Lift axle valve unit (1) for a commercial vehicle comprising an air suspension, **characterised in that** the lift axle valve unit (1) comprises a heating device (23) by which it is possible to heat the lift axle valve unit according to the needs.

2. Lift axle valve unit (1) of claim 1, **characterised in that** the heating device (23) is embodied as a module.

3. Lift axle valve unit (1) of claim 1 or 2, **characterised in that** the heating device (23) comprises a heating element (21) which is arranged in a recess (20) of a housing (19) of the lift axle valve unit (1).

4. Lift axle valve unit (1) of claim 1 or 2, **characterised in that** the heating device (23) comprises a heating element (21) which is a heating mat (46) which contacts a contact surface (47) of the housing (19).

5. Lift axle valve unit (1) of claim 3 or 4, **characterised in that** the heating element (21) is arranged between at least two valve elements of the lift axle valve unit (1), in particular between a switching piston (13) and a control piston (8).

6. Lift axle valve unit (1) of one of the preceding claims, **characterised in that** the heating device (23) comprises a temperature sensor (49).

7. Lift axle valve unit (1) of claim 6, **characterised in that** the temperature sensor (49) comprises a temperature switch (50) which activates the or a heating element (21) when falling below an activation threshold value of the temperature.

8. Lift axle valve unit (1) of claim 6 or 7, **characterised in that** the temperature sensor (49) comprises a temperature switch (50) which deactivates the or a heating element (21) when a deactivation threshold value of the temperature is exceeded.

9. Lift axle valve unit (1) of one of the preceding claims, **characterised in that** a control unit (39) is provided which deactivates the heating device (23) when the lift axle valve unit (1) is in a switching state wherein the lift axle is lowered.

10. Lift axle valve unit (1) of one of the preceding claims, **characterised in that** the actuation of the heating device (23) depends on the activation of the ignition.

11. Lift axle valve unit (1) of one of the preceding claims, **characterised in that** the or a heating element (21) is arranged in a damping reservoir or damping container (29).

12. Lift axle valve unit (1) of claim 11, **characterised in that** a throttle (33) is formed with the heating device (23).

13. Lift axle valve unit (1) of one of the preceding claims, **characterised in that** the heating device (23) comprises a control port (26), a port (25) for an electric power supply and/or an outlet port (27).

14. Use of a heating device (23) by which it is possible to achieve a heating according to the needs for a lift axle valve unit (1) of a commercial vehicle comprising an air suspension.

## Revendications

1. Unité de soupape d'essieu relevable (1) pour un véhicule utilitaire avec amortissement pneumatique, **caractérisé en ce que** l'unité de soupape d'essieu relevable (1) comprend un dispositif de chauffage (23), au moyen duquel un chauffage de l'unité de soupape d'essieu relevable peut être effectué si besoin.

2. Unité de soupape d'essieu relevable (1) selon la revendication 1, **caractérisée en ce que** le dispositif de chauffage (23) est conçu comme un module.

3. Unité de soupape d'essieu relevable (1) selon la revendication 1 ou 2, **caractérisée en ce que** le dispositif de chauffage (23) comprend un élément de chauffage (21) qui est disposé dans un évidement (20) d'un boîtier (19) de l'unité de soupape d'essieu relevable (1).

4. Unité de soupape d'essieu relevable (1) selon la revendication 1 ou 2, **caractérisée en ce que** le dispositif de chauffage (23) comprend un élément de chauffage (21) qui est conçu comme un tapis chauffant (46), qui s'appuie contre une surface d'appui (47) du boîtier (19).

5. Unité de soupape d'essieu relevable (1) selon la revendication 3 ou 4, **caractérisée en ce que** l'élément de chauffage (21) est disposé entre au moins deux éléments de soupapes, plus particulièrement entre un piston de commutation (13) et un piston de régulation (8), de l'unité de soupape d'essieu relevable (1).

6. Unité de soupape d'essieu relevable (1) selon l'une des revendications précédentes, **caractérisée en ce que** le dispositif de chauffage (23) comprend un capteur de température (49).

7. Unité de soupape d'essieu relevable (1) selon la revendication 6, **caractérisée en ce que** le capteur de température (49) est conçu avec un commutateur de température (50), qui active le ou un élément de chauffage (21), lorsque la température tombe en dessous d'une valeur seuil d'activation.

8. Unité de soupape d'essieu relevable (1) selon la revendication 6 ou 7, **caractérisée en ce que** le capteur de température (49) est conçu avec un commutateur de température (50), qui désactive le ou un élément de chauffage (21) lorsqu'une valeur seuil de désactivation de la température est dépassée.

9. Unité de soupape d'essieu relevable (1) selon l'une des revendications précédentes, **caractérisée en ce qu'**une unité de commande (39) est présente, qui désactive le dispositif de chauffage (23) lorsque l'unité de soupape d'essieu relevable (1) est dans une position de commutation dans laquelle l'essieu relevable est abaissé.

10. Unité de soupape d'essieu relevable (1) selon l'une des revendications précédentes, **caractérisée en ce que** l'actionnement du dispositif de chauffage (23) dépend de l'activation de l'allumage.

11. Unité de soupape d'essieu relevable (1) selon l'une des revendications précédentes, **caractérisée en ce que** le ou un élément de chauffage (21) est disposé dans un récipient d'évaporation (29).

12. Unité de soupape d'essieu relevable (1) selon la revendication 11, **caractérisé en ce que**, avec le dispositif de chauffage (23), est formé un étranglement (33).

13. Unité de soupape d'essieu relevable (1) selon l'une des revendications précédentes, **caractérisée en ce que** le dispositif de chauffage (23) comprend un raccord de commande (26), un raccord (25) pour une alimentation électrique et/ou un raccord de sortie (27).

14. Utilisation d'un dispositif de chauffage (23), au moyen duquel, un chauffage peut être effectué si nécessaire, pour une unité de soupape d'essieu relevable (1) d'un véhicule utilitaire avec amortissement pneumatique.
